# EUROPÄISCHE PATENTSCHRIFT

(11) **EP 0 677 912 B1**
(45) Veröffentlichungstag und Bekanntmachung des Hinweises auf die Patenterteilung: **15.09.1999**
(21) Anmeldenummer: 95105360.2
(22) Anmeldetag: 10.04.1995
(51) Int. Cl.: H02J 7/10, H02J 7/00

(54) **Ladeschaltung für Batterien**
Charging circuit for batteries
Circuit de charge pour batteries

(30) Priorität: 13.04.1994 CH 110094
(43) Veröffentlichungstag der Anmeldung: 18.10.1995
(73) Patentinhaber: Zinniker, Rolf, Dr., CH-4652 Winznau (CH)
(72) Erfinder: Zinniker, Rolf, Dr., CH-4652 Winznau (CH)
(74) Vertreter: Patentanwälte Schaad, Balass, Menzl & Partner AG

(56) Entgegenhaltungen:
- EP-A- 0 226 360
- EP-A- 0 297 421
- EP-A- 0 372 823
- EP-A- 0 498 679
- GB-A- 2 060 181
- US-A- 4 237 409
- PATENT ABSTRACTS OF JAPAN vol. 011 no. 036 (E-477) ,3.Februar 1987 & JP-A-61 206179 (MATSUSHITA ELECTRIC IND CO LTD) 12.September 1986,
- PATENT ABSTRACTS OF JAPAN vol. 018 no. 331 (M-1626) ,23.Juni 1994 & JP-A-06 078403 (NISSAN MOTOR CO LTD;OTHERS: 02) 18.März 1994,

## Beschreibung

Die Erfindung betrifft eine Ladeschaltung für Batterien nach dem Oberbegriff von Anspruch 1.

Während z.B. die relativ kostspieligen Nickel-Cadmium Batterien für das Vielfach-Wiederaufladen als besonders geeignet gelten, wird das Wiederaufladen von den einen bedeutend grösseren Marktanteil beherrschenden, sogenannten Alkalibatterien bisher praktisch nicht angewendet. Alkalibatterien werden von den Herstellern mit Hinweis auf eine Explosions- und Auslaufgefahr als nicht wiederaufladbar deklariert. Theoretische und praktische Erkenntnisse zeigen jedoch, dass auch Alkalibatterien, wenn auch mit einem allmählichen Kapazitätsverlust einhergehend, wiederaufladbar sind. Das Wiederaufladen ist ohne Gefahr dann möglich, wenn ein Überladen der Batterie vermieden wird.

Aus dem Bericht "Rechargeable alakaline manganese-zinc 'Ram' batteries for consumer applications and the proper selection of chargers", K.Kordesch, CH.Faistauer, J.D.Ivad, [8th International Battery Materials Symposium Brussels May 9 - 13 Brussels] sind schon relativ einfache Ladeschaltungen für das Wiederaufladen von Alkalibatterien bekannt, die eine Begrenzung der Ladespannung z.B. mit Hilfe von Zenerdioden und Transistoren ermöglichen. Allerdings sind solche Ladeschaltungen insbesondere für das Laden von Monozellen wenig zuverlässig, da die Spannungsbegrenzung ungenau erfolgt.

Das Dokument JP,A,61 206179 sowie dessen Zusammenfassung, das Dokument Patent Abstracts of Japan vol. 11 no. 36; 12. September 1985, offenbaren eine Serieschaltung von wiederaufladbaren Batterien, wobei parallel zu jeder Batterie jeweils eine Diode angeordnet ist, welche die Aufgabe haben, die Spannung über jeder Batterie zu stabilisieren. Diese Anordnung ist geeignet, um Batterien, welche in einer Serieschaltung angeordnet und untereinander permanent elektrisch verbunden sind, zu laden. Diese Anordnung ist nachteilig, wenn einzeln einfügbare und herausnehmbare Batterien zu laden sind. Zudem steht keine Information bezüglich dem Ladezustand der Batterien zur Verfügung. Diese Anordnung ist daher nicht geeignet ein Überladen von Alkalibatterien zuverlässig zu verhindern.

Aufgabe der Erfindung ist die Schaffung einer Ladeschaltung, welche das Überladen insbesondere von Alkalibatterien zuverlässig und mit einfachen Mitteln verhindert.

Die Lösung der angegebenen Aufgabe gelingt mit den Merkmalen von Anspruch 1.

Im vorliegenden Zusammenhang wird unter einer Gleichstromquelle eine elektrische Energiequelle, die einen nicht notwendigerweise konstanten Strom liefert, verstanden.

Durch die zu den Batterieanschlüssen, bzw. zur Batterie parallele Leuchtdiode wird beim Erreichen der Fluss-Spannung derselben die Ladespannung zuverlässig begrenzt und damit der Stromfluss zur Batterie auf ein ungefährliches Mass herabgesetzt.

Gemäss einem bevorzugten Ausführungsbeispiel weist der zu den Batterieanschlüssen parallele Zweig eine einzige Leuchtdiode auf, deren Fluss-Spannung einer Monozellen-Ladeschluss-Spannung mindestens annähernd gleich ist. Damit kann die Ladespannung, d.h. die während des Ladevorganges über der Monozelle messbare Spannung, auf einem z.B. 8 - 15% über der Nennspannung liegenden Verhältniswert gehalten werden. Durch Wahl einer entsprechenden Leuchtdiode kann dieser Verhältniswert genau erreicht und eingehalten werden.

Nachfolgend wird die Erfindung anhand mehrerer beispielsweiser Ausführungsformen und unter Bezugnahme auf die Zeichnungen näher erläutert. Es zeigen:
- Fig. 1: schematisch eine Ladeschaltung nach der ersten Ausführungsform bestimmt für eine Monozelle;
- Fig. 2: eine zweite Ausführungsform für das gleichzeitige Laden mehrerer Monozellen.
- Fig.3: eine Variante der Ausführungsform nach Fig. 2; und
- Fig. 4: eine Variante zu den Ausführungsformen nach den Fig. 1 bis 3.

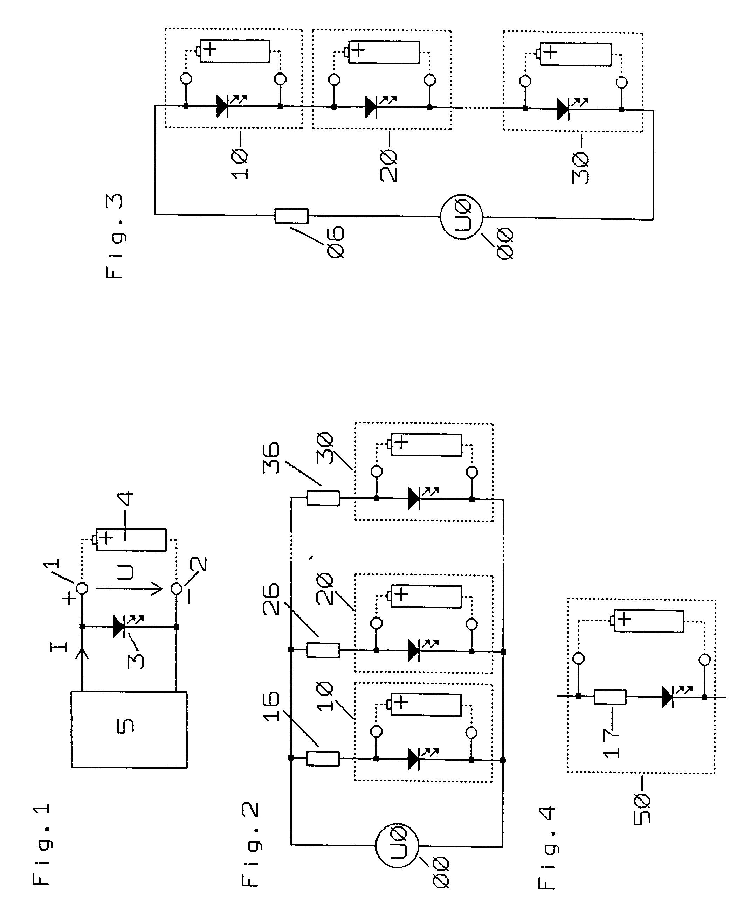

Gemäss dem ersten Ausführungsbeispiel besteht die Erfindung nach Fig. 1 darin, zur Begrenzung der Ladespannung und zur Anzeige des Ladezustandes in jedem Ladeplatz an die beiden ein Paar von Batterieanschlüssen bildende Ladekontakte 1 und 2 eine Leuchtdiode 3 in Flussrichtung gepolt (Anode an positiven, Kathode an negativen Kontakt) anzuschliessen. Die Leuchtdiode liegt damit schaltungstechnisch parallel zu der zu ladenden Zelle 4 und dem Ausgang der beispielsweise als Transformator mit nachgeschaltetem Gleichrichter umfassenden Gleichstromquelle 5.

Eine Leuchtdiode ist ein elektrisches Bauteil mit zwei Anschlüssen (Anode und Kathode) und einer nichtlinearen Strom-Spannungskennlinie (der Zusammenhang zwischen Strom und Spannung am Bauteil ist nicht linear). Sie wird schulgemäss in erster Linie dazu eingesetzt, um eine digitale Information (ein/aus) durch Leuchten oder Nichtleuchten optisch anzuzeigen oder in zweiter Linie um eine analoge Information durch mehr oder weniger helles Leuchten darzustellen.

Solange die Spannung über der Leuchtdiode kleiner als deren Fluss-Spannung ist, fliesst in erster Näherung kein Strom durch die Leuchtdiode. Wird die Fluss-Spannung dagegen erreicht, so kann in erster Näherung ein beliebiger Strom in Flussrichtung durch die Leuchtdiode fliessen, ohne dass die Spannung weiter ansteigt.

Wird eine ganz oder teilweise entladene Batterie an einen solcherart ausgeführten Ladeplatz gemäss Fig. 1 angeschlossen, so liegt die Ladespannung U zuerst unterhalb der Fluss-Spannung der Leuchtdiode 3, diese ist dunkel, der gesamte von der Ladeschaltung 5 gelieferte Strom I fliesst in die Batterie 4 und lädt diese langsam auf, die Ladespannung U beginnt anzusteigen. Sobald diese die Fluss-Spannung der Leuchtdiode erreicht, ist ein weiterer Anstieg nicht mehr möglich: die Leuchtdiode übernimmt den von der Batterie nicht mehr aufnehmbaren Strom unter gleichzeitiger Anzeige der zunehmenden Ladung durch langsam immer helleres Leuchten. Volladung ist erreicht, wenn die Batterie keinen Strom mehr aufnimmt, der gesamte Strom I durch die Leuchtdiode fliesst und diese damit mit maximaler Helligkeit leuchtet. Damit wird eine Überladung der Batterie verhindert. Angenommen, die Ladeschaltung nach Fig. 1 sei für das Wiederaufladen von Alkali-Monozellen auszulegen, deren Nennspannung 1,5 V beträgt. Als Leuchtdiode 3 ist in diesem Fall eine solche mit einer etwa 8 - 15% über dieser Nennspannung liegenden Fluss-Spannung zu wählen. Damit wird die über den Anschlüssen 1 und 2 maximal messbare Spannung auf den Wert der Ladeschluss-Spannung der Monozelle 3 begrenzt.

In einem Ladegerät mit mehreren Ladeplätzen können für die gleichzeitige Ladung von mehreren Batterien die Ladeplätze 10, 20, 30 etc. entweder gemäss Fig. 2 durch je einen Widerstand 16, 26, 36 etc. entkoppelt parallelgeschaltet werden oder gemäss Fig. 3 in Serie geschaltet werden. Die Spannungsquelle U0 mit den Widerständen 16, 26, 36 etc. bzw. dem Widerstand 06 entsprechen der Ladeschaltung 5 gemäss Fig. 1.

Als **Helligkeitsreferenz** für Volladung kann sowohl in der Anordnung nach Fig. 2 wie 3 ein **Referenzladeplatz** ohne Ladeklemmen, der folglich immer leer bleibt, eingefügt werden. Wie bei einem normalen Ladeplatz mit vollgeladener Batterie fliesst der gesamte Strom durch die Leuchtdiode. Damit in diesen Ladeplätzen der gleiche Strom fliesst, wäre für die Referenzleuchtdiode bei der Anordnung nach Fig. 2 eine Parallelschaltung und nach Fig. 3 eine Serieschaltung zu den übrigen Ladeplätzen vorzusehen. Dadurch leuchtet diese mit maximaler Helligkeit und bildet damit eine Referenz für Volladung für die übrigen Ladeplätze.

Wird auf einen Referenzladeplatz verzichtet, so kann ein nicht belegter Ladeplatz als Referenz dienen. Ebenso kann eine Batterie kurzzeitig von den Ladekontakten abgehoben werden, wodurch die zugehörige Leuchtdiode ebenfalls mit maximaler Helligkeit leuchtet und als Referenz für Volladung dient.

Eine Variante für die Beschaltung eines Ladeplatzes mit einer Leuchtdiode ist in Fig.4 dargestellt. Mit dem in Serie zur Leuchtdiode geschalteten Widerstand 17 kann die Endladespannung gegenüber der Fluss-Spannung der Leuchtdiode zu einer optimalen Anpassung an die zu ladende Batterie etwas angehoben werden.

Die Handhabung eines gemäss der Erfindung aufgebauten Ladegerätes ist äusserst einfach. Der Anwender wird zuerst das Ladegerät ohne eingelegte Batterien mit dem Stromnetz (bzw. einer anderen vorgesehenen Elektrizitätsquelle) verbinden. Darauf leuchten die Leuchtdioden auf allen Ladeplätzen mit maximaler Helligkeit. Damit wird angezeigt, dass jeder Ladeplatz funktionsfähig ist. Danach werden die Batterien nacheinander in die Ladeplätze eingelegt. Leuchtet eine Leuchtdiode weiter mit maximaler Helligkeit, so ist entweder die Batterie bereits voll geladen, diese ist defekt oder es ist die Verbindung zu den Ladekontakten nicht hergestellt). Durch Bewegen oder Drehen der Batterie kann eine schlechte Verbindung behoben werden. Mit zunehmender Ladung werden die Leuchtdioden immer heller leuchten (bzw. zuerst zu leuchten beginnen) bis bei maximaler Helligkeit die Volladung erreicht ist. Wie eine Helligkeitsreferenz für Volladung erhalten werden kann, wurde bereits beschrieben.

Damit die im Zusammenhang mit Fig.1 beschriebene Begrenzung der maximalen Spannung über den Batterieanschlüssen auch beim Ausfall der Leuchtdiode (in der Weise, dass diese keinen Strom mehr führen kann, z.B. durch einen Unterbruch in der Kontaktierung des Halbleiters) garantiert bleibt, kann entsprechend den allgemein üblichen Methoden der Sicherung einer erhöhten Zuverlässigkeit durch Redundanz eine zweite oder mehrere Leuchtdioden zur beschriebenen Arbeitsdiode parallel geschaltet werden. Ist die Flussspannung der parallelgeschalteten identisch zur Arbeitsdiode, so wird eine aktive Redundanz erreicht. Der Strom wird auch ohne Defekt auf die Leuchtdioden aufgeteilt; um die beschriebene Ladezustandsanzeige in gleicher Art aufrechtzuerhalten, müssen die Helligkeiten der Leuchtdioden optisch addiert werden. Wird deren Flussspannung geringfügig höher gewählt, wird eine passive Redundanz erhalten. Ohne Defekt fliesst in erster Näherung kein Strom durch die Parallelschaltung, die Ladezustandsanzeige bleibt wie beschrieben erhalten.

Eine solche Sicherheitsanordnung mit z.B. einer zur Arbeitsdiode parallel geschalteten Redundanzdiode kann auch im Zusammenhang mit anderen Ausführungen der erfindungsgemässen Ladeschaltung vorgesehen sein.

## Patentansprüche

1. Ladeschaltung für Batterien (4), insbesondere für Alkalibatterien, mit einem eine Gleichstromquelle (00) und ein Paar von Batterieanschlüssen (1,2) aufweisenden Stromkreis, sowie einer Leuchtdiode (3) zur Begrenzung der Ladespannung, welche jedem Paar von Batterieanschlüssen (1,2) zugeordnet und in einem zu den Batterieanschlüssen (1,2) parallelen Zweig angeordnet ist, wobei die Fluss-Spannung der Leuchtdiode (3) der Nennspannung der mit den Batterieanschlüssen (1,2) zu verbindenden Batterie (4) angepasst ist, dadurch gekennzeichnet, dass eine Leuchtdiode (3) als Referenzleuchtdiode vorgesehen ist, welche entweder
- parallel zu einer Mehrzahl parallel geschalteter Paare von Batterieanschlüssen (1,2) geschaltet ist und mit der Gleichstromquelle (00) den Stromkreis ausbilden,
- oder in Serie geschaltet zu einer Mehrzahl in Serie geschalteter Paare von Batterieanschlüssen (1,2) mit der Gleichstromquelle (00) den Stromkreis ausbildet, wobei die Referenzleuchtdiode vorgesehen ist die maximal mögliche Helligkeit und somit den Zustand der Vollladung der Batterie (4) anzuzeigen.

2. Ladeschaltung nach Anspruch 1, dadurch gekennzeichnet, dass der Zweig eine einzige Leuchtdiode (3) aufweist, deren Fluss-Spannung einer Monozellen-LadeschlussSpannung mindestens annähernd gleich ist.

3. Ladeschaltung nach Anspruch 1 oder 2, dadurch gekennzeichnet, dass die Fluss-Spannung der Leuchtdiode (3) 8 bis 15% über der Nennspannung der Batterie (4) liegt.

4. Ladeschaltung nach Anspruch 1 oder 2, dadurch gekennzeichnet, dass die Leuchtdiode (3) eine derart bezüglich der Nennspannung beziehungsweise der Ladeschluss-Spannung der Batterie (4) abgestimmte Fluss-Spannung aufweist, dass die Leuchtdiode (3) den von der Batterie (4) nicht mehr aufnehmbaren Strom durch ein zunehmend helleres Leuchten zur Anzeige bringt, um die zunehmende Ladung der Batterie (4) anzuzeigen.

5. Ladeschaltung nach einem der Ansprüche 1 bis 4, dadurch gekennzeichnet, dass im Zweig der Leuchtdiode (3) ein zu dieser in Serie angeordneter Abstimmwiderstand (17) vorgesehen ist.

6. Ladeschaltung nach einem der Ansprüche 1 bis 5, dadurch gekennzeichnet, dass zur Leuchtdiode (3) mindestens eine weitere Leuchtdiode (3) als Sicherheitsorgan parallel geschaltet ist.

7. Die Verwendung der Ladeschaltung nach einem der vorangehenden Ansprüche für Alkalibatterie-Ladegeräte.

## Claims

1. Charging circuit for batteries (4), in particular for alkaline batteries, with an electric circuit having a DC source (00) and a pair of battery connections (1,2) and also a light-emitting diode (3) for limiting the charging voltage, which is assigned to each pair of battery connections (1,2) and is arranged in a path in parallel with the battery connections (1,2), the forward voltage of the light-emitting diode (3) being matched to the rated voltage of the battery (4) to be connected to the battery connections (1,2), characterized in that a light-emitting diode (3) is provided as reference light-emitting diode which either
- is connected in parallel with a plurality of pairs of battery connections (1,2), the said pairs being connected in parallel, and forms the electric circuit with the DC source (00),
- or, connected in series with a plurality of pairs of battery connections (1,2), the said pairs being connected in series, forms the electric circuit with the DC source (00),
the reference light-emitting diode being provided for indicating the maximum possible brightness and, consequently, the state of full charge of the battery (4).

2. Charging circuit according to Claim 1, characterized in that the path has a single light-emitting diode (3), whose forward voltage is at least approximately equal to an end-of-charging voltage of a single-cell battery.

3. Charging circuit according to Claim 1 or 2, characterized in that the forward voltage of the light-emitting diode (3) is 8 to 15% above the rated voltage of the battery (4).

4. Charging circuit according to Claim 1 or 2, characterized in that the light-emitting diode (3) has a forward voltage which is co-ordinated with respect to the rated voltage or the end-of-charging voltage of the battery (4) in such a way that the light-emitting diode (3) indicates the current that can no longer be taken up by the battery (4) by illuminating increasingly more brightly, in order to indicate the increasing charge of the battery (4).

5. Charging circuit according to one of Claims 1 to 4, characterized in that the path of the light-emitting diode (3) is provided with a trimming resistor (17) arranged in series with the said diode.

6. Charging circuit according to one of Claims 1 to 5, characterized in that at least one further light-emitting diode (3) is connected in parallel with the light-emitting diode (3) as a safety element.

7. Use of the charging circuit according to one of the preceding claims for alkaline battery chargers.

## Revendications

1. Couplage de charge pour des batteries (4), en particulier pour des batteries alcalines, avec un circuit électrique présentant une source de courant continu (00) et une paire de bornes de raccordement de batterie (1, 2), ainsi qu'avec une diode lumineuse (3) pour limiter la tension de charge, qui est associée à chaque paire de bornes de raccordement de batterie (1, 2) et est disposée dans une branche montée en parallèle sur les bornes de raccordement de batterie (1, 2), la tension directe de la diode lumineuse (3) étant adaptée à la tension nominale de la batterie (4) à raccorder aux bornes de raccordement de batterie (1, 2), caractérisé en ce qu'il est prévu une diode lumineuse (3) comme diode lumineuse de référence, qui
- soit est montée en parallèle sur une pluralité de paires de bornes de raccordement de batterie (1, 2) montées en parallèle et forme le circuit électrique avec la source de courant continu (00),
- soit est montée en série avec une pluralité de paires de bornes de raccordement de batterie (1, 2) montées en série et forme le circuit électrique avec la source de courant continu (00), la diode lumineuse de référence étant prévue pour indiquer la luminosité maximale possible et ainsi l'état de la pleine charge de la batterie (4).

2. Couplage de charge suivant la revendication 1, caractérisé en ce que la branche présente une seule diode lumineuse (3), dont la tension directe est au moins approximativement égale à la tension de fin de charge d'une mono-cellule.

3. Couplage de charge suivant la revendication 1 ou 2, caractérisé en ce que la tension directe de la diode lumineuse (3) est supérieure de 8 à 15 % à la tension nominale de la batterie (4).

4. Couplage de charge suivant la revendication 1 ou 2, caractérisé en ce que la diode lumineuse (3) présente une tension directe accordée par rapport à la tension nominale, respectivement à la tension de fin de charge, de la batterie (4), d'une telle façon que la diode lumineuse (3) fasse apparaître le courant qui ne peut plus être accepté par la batterie (4) par une luminosité sans cesse croissante, afin d'indiquer la charge croissante de la batterie (4).

5. Couplage de charge suivant l'une quelconque des revendications 1 à 4, caractérisé en ce qu'il est prévu, dans la branche de la diode lumineuse (3), une résistance d'accord (17) disposée en série avec celle-ci.

6. Couplage de charge suivant l'une quelconque des revendications 1 à 5, caractérisé en ce qu'au moins une diode lumineuse supplémentaire (3) est montée en parallèle à la diode lumineuse (3) comme organe de sécurité.

7. L'utilisation du couplage de charge suivant l'une quelconque des revendications précédentes pour des appareils de charge de batteries alcalines.
